# EUROPÄISCHE PATENTSCHRIFT

(11) **EP 1 910 484 B1**
(45) Veröffentlichungstag und Bekanntmachung des Hinweises auf die Patenterteilung: **28.04.2010**
(21) Anmeldenummer: 06762728.1
(22) Anmeldetag: 20.07.2006
(51) Int. Cl.: C09D 175/00, C04B 24/24, C08G 18/12, C08G 18/08

(54) **AMPHIPHILE POLYMERVERBINDUNGEN, VERFAHREN ZU IHRER HERSTELLUNG UND DEREN VERWENDUNG**
AMPHIPHILIC POLYMER COMPOUNDS, METHOD FOR THE PRODUCTION THEREOF AND THEIR USE
COMPOSES POLYMERES AMPHIPHILES, PROCEDES DE PRODUCTION ET UTILISATION ASSOCIES

(30) Priorität: 21.07.2005 DE 102005034183
(43) Veröffentlichungstag der Anmeldung: 16.04.2008
(73) Patentinhaber: Construction Research & Technology GmbH, 83308 Trostberg (DE); Evonik Goldschmidt GmbH, 45127 Essen (DE)
(72) Erfinder: INGRISCH, Stefan, 83376 Truchtlaching (DE); ALBRECHT, Gerhard, 83342 Tacherting (DE); THALER, Stefan, 83308 Trostberg (DE); BAUER, Mathias, 83308 Trostberg (DE)
(74) Vertreter: Böhm, Brigitte
(86) Internationale Anmeldenummer: PCT/EP2006/007169
(87) Internationale Veröffentlichungsnummer: WO 2007/009797

(56) Entgegenhaltungen:
- EP-A1- 0 092 242
- EP-A1- 0 357 886
- DE-A1- 3 229 564
- DE-A1- 19 858 554

## Beschreibung

Die vorliegende Erfindung betrifft amphiphile Polymer-Verbindungen, Verfahren zu ihrer Herstellung und deren Verwendung als Zusatzmittel für hydraulisch abbindbare Baustoffmassen (wie z. B. Beton oder Mörtel), welches insbesondere zur Massenhydrophobierung oder/und zur Unterdrückung von Ausblühungen auf Oberflächen von gehärteten, hydraulisch abbindbaren Baustoffmassen eingesetzt wird.

Ein bekanntes Problem insbesondere bei Zement-basierten Baustoffmassen stellt das Auftreten von sog. Ausblühungen (Effloreszenz) dar, wobei man zwischen Primär- und Sekundärausblühungen unterscheidet. Die erstgenannten entstehen bereits beim Aushärten beispielsweise bei Beton, wobei die Kapillaren des Frischbetons mit einer wässrigen Lösung der wasserlöslichen Substanzen des Zementes, im Wesentlichen Calciumhydroxid, gefüllt sind. Beim Erhärten reagiert das Calciumhydroxid an der Betonoberfläche mit dem kohlendioxid der Luft unter Bildung von schwerlöslichem Calciumcarbonat. Durch die Ausfällung von Calciumcarbonat ist die Calciumhydroxid-Konzentration an der Kapillarenmündung geringer als im Inneren der Kapillaren. Daher gelangt ständig neues Calciumhydroxid durch Diffusion aus den tieferen Schichten des Betons an die Kapillarenmündung und reagiert wiederum mit CO₂ zu Calciumcarbonat. Der entsprechende Prozess kommt erst zum Stillstand, wenn die Kapillarenmündungen durch Calciumcarbonat verschlossen sind. Besonders stark treten solchen Primärausblühungen auf, wenn sich auf der Betonoberfläche ein Kondenswassefilm befindet, weil sich dann das Calciumhydroxid über die gesamte Betonoberfläche verteilen kann und diese nach der Reaktion mit Kohlendioxid mit wasserunlöslichem Calciumcarbonat überziehen.

Darüber hinaus kann es auch bei der Freibewitterung von vollständig ausgehärtetem Beton zur Fleckenbildung kommen, die im Allgemeinen als Sekundärausblühungen bezeichnet werden. Diese Sekundärausblühungen dauern in der Regel 1 bis 2 Jahre, wobei als Ursache die langsame Bildung von wasserlöslichem Calciumhydrogencarbonat aus Calciumcarbonat angesehen wird.

Da das Aussehen von solchen mit Ausblühungen behafteten Bauelementen sehr stark beeinträchtigt ist, insbesondere bei farbigen Betonerzeugnissen, hat es nicht an Versuchen gefehlt, diese Effloreszenz durch verschiedene Maßnahmen zu verhindern bzw. zu unterdrücken.

Entsprechend dem Stand der Technik wurden hierzu zwei grundsätzliche Möglichkeiten vorgeschlagen, die jedoch alle nicht zu befriedigenden Ergebnissen geführt haben. Zum einen werden die Oberflächen von ausgehärteten Zement- oder Betonerzeugnissen mit speziellen Überzügen versehen, wobei vor allem verschiedene Silikat- und Acrylatbeschichtungen empfohlen wurden. Nachteilig bei diesem Verfahren ist jedoch die Tatsache, dass diese nachträglichen Beschichtungen relativ umständlich und unwirtschaftlich sind.

Aus diesem Grund hat man versucht, den Baustoffmassen vor deren Aushärtung geeignete Additive zuzusetzen, welche die Entstehung von Ausblühungen verhindern bzw. unterdrücken sollen.

So ist aus der DE 32 29 564 A1 bekannt, bei der Herstellung von eingefärbten Betonsteinen zusätzlich Kreide beispielsweise in Form einer wässrigen Kreideslurry zu verwenden. Hierdurch soll das Bildungsgefälle von Calciumcarbonat an der Oberfläche dadurch verschoben werden, dass bereits am Anfang des Erstarrungsprozesses überschüssiges Calciumcarbonat angeboten wird.

Schließlich wird gemäß der EP 92 242 A1 vorgeschlagen, zur Verhinderung von Ausblühungen dem Beton oberflächenaktive Polymere zuzusetzen. Diese oberflächenaktiven Polymere sollen beim Aushärten des Betons ihre Oberflächenaktivität irreversibel verlieren und dabei zu wasserunlöslichen Produkten umgewandelt werden.

In der Praxis haben sich deartige Hydrophobierungsmittel für ungehärtete Baustoffmassen nicht durchsetzen können, da sie unter den unterschiedlichen Witterungsbedingungen keine zuverlässige Wirkung aufweisen.

WO 2007/003374 A2 stellt einen nicht vorveröffentlichten Stand der Technik dar, welcher allgemein amphiphile Polymer-Verbindungen, Verfahren zu ihrer Herstellung und deren Verwendung als Zusatzmittel für hydraulisch abbindbare Baustoffmassen beschreibt. Beispiel 4B des Dokuments offenbart die Umsetzung von Isophorondüsocyanat mit MPEG 1000, wobei das Reaktionsprodukt nach Erreichen des theoretischen NCO-Sollwertes mit einem durch Umsetzung von Neopentylglycoldiglycidylether und Sonnenblumenölfettsäure erhaltenen Fettsäureaddukt zur Reaktion gebracht wird. Ein Disclaimer für dieses spezielle Verfahren wurde in die Ansprüche des vorliegenden Schutzrechts aufgenommen.

Der vorliegenden Erfindung lag daher die Aufgabe zugrunde, Mittel zur Verhinderung von Ausblühungen auf Oberflächen von gehärteten, hydraulisch abbindbaren Baustoffmassen oder/und zur Massenhydrophobierung bereitzustellen, welche die genannten Nachteile des Standes der Technik nicht aufweisen, sondern die Effloreszenz von hydraulisch abbindbaren Baustoffmassen wirkungsvoll und zuverlässig verhindern.

Diese Aufgabe wurde erfindungsgemäß durch die Bereitstellung von amphiphilen Polymer-Verbindungen gelöst, welche dadurch hergestellt worden sind, dass man
a) eine Di-, Tri- oder Tetraglycidyl-Verbindung (A) mit einer gegebenenfalls ungesättigten Reaktivkomponente (B), bestehend aus einer C₈-C₂₈-Fettsäure, einem C₈-C₂₈-Alkohol oder einem C₈-C₂₈-sekundären Amin umsetzt, und
b₁) das Umsetzungsprodukt aus Stufe a) zuerst mit
b_{1α}) einer aliphatischen oder aromatischen Polyisocyanat-Verbindung (C)
b_{1ß}) und gegebenenfalls anschließend mit einer Polyalkylenoxid-Verbindung (D) der allgemeinen Formel (I) 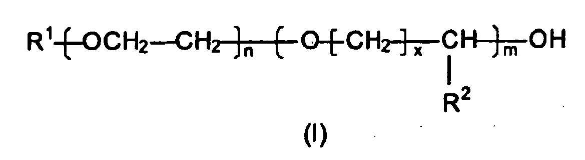 wobei
   R¹ = H, einen linearen oder verzweigten und ggf. ungesättigten aliphatischen Kohlenwasserstoff-Rest mit 1 bis 12 C-Atomen,
   R² = einen linearen oder verzweigten und ggf. ungesättigten aliphatischen Kohlenwasserstoff-Rest mit 1 bis 30 C-Atomen oder Phenyl darstellen,
   m = 0 bis 250,
   n = 3 bis 250 und
   x = 1 bis 12
   bedeuten,
   und die Ethylenoxid- bzw. höheren Alkylenoxid-Einheiten in der Polyalkylenoxid-Verbindung (D) beliebig verteilt sein können, weiterreagieren lässt, und
b_{1γ}) das Umsetzungsprodukt aus Stufe b_{1α}) oder gegebenenfalls b_{1β}) mit einer gegenüber Isocyanaten reaktiven, mindestens eine OH-, NH₂-, NH- oder SH-Gruppe aufweisende Komponente (E) zur Reaktion bringt, oder
b₂) das Umsetzungsprodukt aus Stufe a) mit dem Umsetzungsprodukt von Komponente (C) mit Komponente (E) sowie gegebenenfalls (D) und (C), oder
b₃) das Umsetzungsprodukt aus Stufe a) mit dem Reaktionsprodukt von Komponente (C) und Komponente (D) sowie gegebenenfalls (C) und gegebenenfalls dem Reaktionsprodukt von Komponente (C) und Komponente (E) sowie gegebenenfalls (C) fertigreagieren lässt,
mit der Maßgabe, dass die amphiphile Polymer-Verbindung nicht durch Umsetzung eines Reaktionsproduktes von Neopentylglycoldiglycidylether und Sonnenblumenölfettsäure mit einem Reaktionsprodukt von 1-Isocyanato-5-isocyanatomethyl-3,3,5-trimethyl-cyclohexan und Methoxypolyethylenglykol 1000 hergestellt wird.

Es hat sich hierbei überraschenderweise gezeigt, dass sich diese Polymer-Verbindungen ausgezeichnet als Mittel zur Verhinderung des Ausblühens oder/und zur Hydrophobierung von hydraulisch abbindbaren Baustoffmassen eignen. Außerdem nehmen die hydraulisch abbindbaren Produkte durch die erfindungsgemäßen Zusatzmittel deutlich weniger Wasser auf, wodurch sich Frostschäden und eine schnelle Verrostung des Bewehrungsstahls deutlich reduzieren lassen.

Die erfindungsgemäßen amphiphilen Polymer-Verbindungen sind durch ein mindestens zweistufiges Verfahren, umfassend die Reaktionsschritte a) und b), erhältlich.

In der ersten Reaktionsstufe a) wird eine Di-, Tri- oder Tetraglycidyl-Verbindung (A) mit einer Rekativkomponente (B) umgesetzt.

Als besonders vorteilhaft werden Glycidyl-Verbindungen (A) eingesetzt, die ausgewählt sind aus der Gruppe bestehend aus Cyclohexan-dimethanol-diglycidylether, Glycerin-triglycidylether, Neopentylglycol-diglycidylether, Pentaerythrit-tetraglycidylether, 1,6-Hexandiol-diglycidylether, Polypropylenglycol-diglycidylether, Polyethylenglycol-diglycidylether, Trimethylolpropantriglycidylether, Bisphenol A-diglycidylether, Bisphenol F-diglycidylether, 4,4'-Methylenbis-(N,N-diglycidylanilin), Tetraphenylolethan-glycidylether, N,N-Diglycidylanilin, Diethylenglycol-diglycidylether und 1,4-Butandiol-diglycidylether, bzw. Mischungen daraus.

Es ist als erfindungswesentlich anzusehen, dass die Reaktivkomponente (B) aus einer C₈-C₂₈-Fettsäure, einem C₈-C₂₈-Alkohol oder einem C₈-C₂₈-sekundären Amin besteht, wobei die Reaktivkomponente gesättigte oder ungesättigte Reste aufweisen kann.

Aus der Gruppe der Fettsäuren sind Tallölfettsäure, Stearinsäure, Palmitinsäure, Sonnenblumenölfettsäure, Kokosölfettsäure (C₈-C₁₈), Kokosölfettsäure (C₁₂-C₁₈), Sojaölfettsäure, Leinölfettsäure, Dodecansäure, Ölsäure, Linolsäure, Palmkernölfettsäure, Palmölfettsäure, Linolensäure oder/und Arachidonsäure als bevorzugt anzusehen. Bei den C₈-C₂₈-Alkoholen haben sich vor allem 1-Eicosanol; 1-Octadecanol, 1-Hexadecanol, 1-Tetradecanol, 1-Dodecanol, 1-Decanol sowie 1-Octanol bewährt. Bei den sekundären Aminen mit 8 bis 28 C-Atomen werden insbesondere die Alkylamine aus der Gruppe 2-Ethylhexylamin, Dipentylamin, Dihexylamin, Dioctylamin, Bis-(2-ethylhexyl)amin, N-Methyloctadecylamin sowie Didecylamin eingesetzt.

Das Mol-Verhältnis von Glycidyl-Komponente (A) zu der Reaktivkomponente (B) kann in weiten Grenzen variiert werden, doch hat es sich als besonders vorteilhaft erwiesen, dass pro Mol der Glycidyl-Gruppen von Komponente (A) 0,9 bis 1,1 Mol der Reaktivkomponente (B) eingesetzt werden.

Die zweite Reaktionsstufe b) kann auf verschiedenen Wegen erfolgen. Gemäß der ersten Verfahrensvariante b₁) wird das Umsetzungsprodukt aus Stufe a) in Stufe b_{1α}) zunächst mit einer aliphatischen oder aromatischen Polyisocyanat-Verbindung (C) zur Reaktion gebracht.

Als aliphatische Polyisocyanat-Verbindungen werden vorzugsweise 1-Isocyanato-5-isocyanätomethyl-3,3,5-trimethyl-cyclohexan (IPDI), Bis-(4-isocyanatocyclohexyl)-methan (H12MDI), 1,3-Bis-(1-isocyanato-1-methyl-ethyl)-benzol (m-TMXDI), 1,6-Diisocyanatohexan (HDI), gegebenenfalls dessen höhere Homologe, bzw. technische Isomerengemische der einzelnen aliphatischen Polyisocyanate verwendet, während als aromatische Polyisocyanate insbesondere 2,4-Diisocyanatotoluol (TDI), Bis-(4-isocyanatophenyl)-methan (MDI) und gegebenenfalls dessen höhere Homologe (Polymeric MDI), bzw. technische Isomerengemische der einzelnen aromatischen Polyisocyanate eingesetzt werden.

Gemäß einer bevorzugten Ausführungsform wird die Polyisocyanat-Verbindung in einer solchen Menge eingesetzt, dass das NCO/OH-Äquivalent-Verhältnis bzgl. der freien OH-Gruppe im Umsetzungsprodukt von Glycidyl-Komponente (A) und Reaktivkomponente (B) aus Stufe a) 0,5 bis 2,0 beträgt.

Gegebenenfalls kann anschließend in Stufe b_{1β}) das Reaktionsprodukt aus Stufe b_{1α}) mit einer Verbindung (D) der allgemeinen Formel (I) umgesetzt werden. 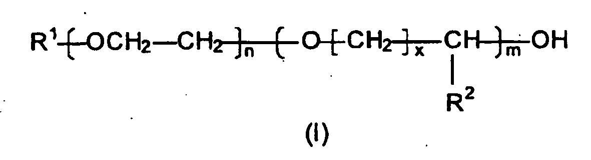 Hierbei bedeuten
R¹ = H, einen linearen oder verzweigten und ggf. ungesättigen aliphatischen Kohlenwasserstoff-Rest mit 1 bis 12 C-Atomen,
R² = einen linearen oder verzweigten und ggf. ungesättigten aliphatischen Kohtenwasserstoff-Rest mit 1 bis 30 C-Atomen oder Phenyl darstellen,
m = 0 bis 250,
n = 3 bis 250 und
x = 1 bis 12,
und die Ethylenoxid- bzw. höheren Alkylenoxid-Einheiten in der Polyalkylenoxid-Verbindung (D) können beliebig verteilt sein.

Vorzugsweise steht R in Formel (I) für -CH₃ (Methyl), CH=CH₂— (Vinyl) sowie CH₂=CH—CH₂— (Allyl). Besonders bevorzugt wird als Polyalkylenoxid-Verbindung (D) Methoxy-polyethylenglycol (MPEG) eingesetzt.

Es hat sich als besonders vorteilhaft erwiesen, dass man die Polyalkylenoxid-Verbindung (D) in einer Menge von 0,4 bis 0,6 Mol pro Mol an freien Isocyanat-Gruppen des Umsetzungsproduktes in Stufe b_{1α}) verwendet.

Das Umsetzungsprodukt aus Stufe b_{1β}) oder b_{1α}) lässt man anschließend in Stufe b_{1γ}) mit einer gegenüber Isocyanaten reaktiven, mindestens eine OH-, NH₂-, NH- oder SH-Gruppe aufweisende Komponente (E) reagieren.

Als Komponente (E) werden insbesondere aliphatische Alkohole, primäre oder sekundäre Amine sowie Thiole mit jeweils 1 bis 12 C-Atomen, oder aromatische Alkohole, (primäre oder sekundäre) Amine sowie Thiole mit jeweils 6 bis 10 C-Atomen verwendet. Vorzugsweise werden hierbei lineare oder verzweigte C₂-C₄-Alkohole oder Thiole, primäre oder sekundäre Amine mit C₁-C₄-Alkyl- oder Phenyl-Resten, gegebenenfalls substituierte Phenole oder Thiophenole eingesetzt. Gemäß einer bevorzugten Ausführüngsform werden als Komponente (E) Amino- oder Mercaptosilane ausgewählt aus der Gruppe bestehend aus 3-Aminopropyltriethoxysilan, 3-Aminopropyltrimethoxysilan, 2-Aminoethyl-3-aminopropyltrimethoxysilan, Bis-(3-triethoxysilylpropyl)amin, Bis-(3-trimethoxysilylpropyl)amin, N-(n-Butyl)-3-aminopropyltrimethoxysilan, N-(2-Aminoethyl)-3-aminopropylmethyldimethoxysilan, 3-Aminopropylmethyldiethoxysilan, 3-Aminopropylmethyldiethoxysilan, 3-Mercaptopropyltrimethoxysilan und 3-Mercaptopropyltriethoxysilan herangezogen.

Vorzugsweise wird die Komponente (E) in einer Menge von 0,4 bis 0,6 Mol pro Mol an freien Isocyanat-Gruppen der Reaktionsprodukte in Stufe b_{1α}) bzw. b_{1β}) eingesetzt.

Gemäß einer weiteren Verfahrensvariante b₂) kann man das Umsetzungsprodukt aus Stufe a) auch mit dem Reaktionsprodukt von Komponente (C) mit Komponente (E) reagieren lassen, wobei gegebenenfalls die Komponenten (C) and (D) als weitere Reaktionspartner dem Reaktionsgemisch gleichzeitig oder nacheinander zugegeben werden können.

Schließlich ist es im Rahmen der vorliegenden Erfindung gemäß der Verfahrensvariante b₃) noch möglich, das Umsetzungsprodukt aus Stufe a) mit dem Reaktionsprodukt von Komponente (C) und Komponente (D) und gegebenenfalls (C) fertigreagieren zu lassen, wobei auch gleichzeitig oder nacheinander dem Reaktionsgemisch das Umsetzungsprodukt von Komponente (C) und Komponente (E) sowie gegebenenfalls (C) zugegeben werden kann.

Die Umsetzung der Glycidyl-Verbindung (A) mit der Reaktivkomponente (B) gemäß Stufe a) ist gemäß dem Stand der Technik hinreichend beschrieben worden. So wird die Umsetzung von Epoxyden mit Carbonsäuren in "Reaktionen der organischen Synthese", Cesare Ferri, 1. Auflage 1978, Seite 505 sowie in "Methoden der organischen Chemie", Houben-Weyl, 4. Auflage, Band 6/3, Seite 459 sowie Band 14/2, Seite 507 bis 510 beschrieben. Bezüglich der Umsetzung von Epoxyden mit Alkoholen sei auf "Methoden der organischen. Chemie", Houben-Weyl, 4. Auflage, Band 6/3, Seite 40 bis 44 sowie Seite 456 bis 458 und Band 14/2, Seite 503 bis 506 sowie auf "Reaktionen der organischen Synthese", Cesare Ferri, 1. Auflage 1978, Seite 505 verwiesen. Die Umsetzung von Epoxyden mit Aminen wird beispielsweise in "Methoden der organischen Chemie, Houben-Weyl, 4. Auflage, Band 14/2, Seite 516 bis 523 sowie in "Reaktionen der organischen Synthese", Cesare Ferri, 1. Auflage 1978, Seite 504 bis 505 offenbart.

Vorzugsweise erfolgt die Umsetzung der Glycidyl-Komponente (A) mit der Reaktivkomponente (B) bei Temperaturen von 20 bis 250 °C, wobei die Reaktion gegebenenfalls in Gegenwart eines Katalysators erfolgen kann. So hat es sich als besonders vorteilhaft erwiesen, bei der Umsetzung der Glycidyl-Komponente (A) mit der Fettsäure als Reaktivkomponente (B) auf basische Katalysatoren, wie z.B. Tetraalkylammoniumhalogenide oder Alkalihydroxide, zurückzugreifen. Im Falle der Umsetzung der Glycidyl-Komponente (A) mit einem Alkohol als Reaktivkomponente (B) kann die Reaktion entweder säurekatalysiert (z. B. Schwefelsäure, Perchlorsäure, Fluorwasserstoffsäure, Bortrifluorid, Zinn (IV)-Chlorid) oder basenkatalysiert (z. B. Alkalihydroxide, Alkalialkoholate, tertiäre Amine) durchgeführt werden.

Die Umsetzung der Glycidyl-Komponente (A) mit den sekundären Aminen als Reaktivkomponente (B) erfolgt in der Regel ohne Katalysator, doch können kleine Mengen an Wasser oder Alkohol (z. B. Phenol) dem Reaktionsgemisch zugegeben werden.

Die Reaktion des Umsetzungsproduktes aus Stufe a) erfolgt entsprechend der Verfahrensvariante b1) in folgenden drei Teilschritten:
b_{1α}) Umsetzung mit der Polyisocyanat-Komponente (C) ohne Lösemittel bei Temperaturen von 20 bis 120°C
b_{1β}) und gegebenenfalls anschließende Weiterreaktion mit der Polyalkylenoxid-Verbindung (D) ohne Lösemittel bei Temperaturen von 20 bis 150°C und
b_{1γ}) Fertigreaktion des Umsetzungsproduktes aus Stufe b_{1α}) oder gegebenenfalls b_{1β}) mit der Komponente (E) ohne Lösemittel bei Temperaturen von 20 bis 150°C.

In einer bevorzugten Ausführungsform erfolgen die in den Schritten b_{1β}) und b_{1γ}) genannten Umsetzungen jeweils ohne Verwendung eines Lösemittels.

Alternativ kann die Reaktionsfolge entsprechend der Variante b₁) folgendermaßen aussehen:
b_{1α}) Weiterreaktion des Umsetzungsproduktes aus Stufe a) mit der Polyisocyanat-Komponente (C) bei Temperaturen von 20 bis 120°C und
b_{1β}) Fertigreaktion des Umsetzungsproduktes aus Stufe b_{1α}) entweder nacheinander oder gleichzeitig mit der Polyalkylenoxid-Verbindung (D) und der gegenüber Isocyanaten reaktiven Komponente (E) bei Temperaturen von 20 bis 150°C.

Als weitere Ausführungsform entsprechend der vorliegenden Erfindung erfolgt die Weiterreaktion des Umsetzungsproduktes aus Stufe a) gemäß der Verfahrensvariante b₂) in der Form, dass man dieses Reaktionsprodukt aus Stufe a) mit dem Umsetzungsprodukt von Komponente (C) mit Komponente (E) sowie gegebenenfalls (D) und (C) bei Temperaturen von 20 bis 150°C fertigreagieren lässt. Die Umsetzung von Komponente (C) mit Komponente (E) erfolgt hierbei bevorzugt ohne Lösemittel bei Temperaturen von 20 bis 150°C.

Schließlich ist es im Rahmen der vorliegenden Erfindung entsprechend der Verfahrensvariante b₃) auch möglich, das Umsetzungsprodukt aus Stufe a) mit dem Reaktionsprodukt von Komponente (C) und (D) sowie gegebenenfalls (C) und gegebenenfalls dem Reaktionsprodukt von Komponente (C) und (E) sowie gegebenenfalls (C) reagieren zu lassen.

Die Herstellung der erfindungsgemäßen Polymer-Verbindungen kann sowohl batchweise als auch kontinuierlich oder halbkontinuierlich erfolgen.

Die erfindungsgemäß vorgeschlagenen Polymer-Verbindungen eignen sich hervorragend zur Massenhydrophobierung von hydraulisch abbindbaren Baustoffmassen oder/und zur Unterdrückung von Ausblühungen, auf Oberflächen von gehärteten, hydraulisch abbindbaren Baustoffmassen. Hierbei werden die Polymer-Verbindungen den angemachten und nicht ausgehärteten, hydraulisch abbindbaren Baustoffmassen in einer Menge von 0,001 bis 5 Gew.-%, bezogen auf den Bindemittelanteil, zugesetzt. Als hydraulisch abbindbare Baustoffmassen entsprechend der vorliegenden Erfindung sind alle Beton- und Mörtelsysteme anzusehen, die als Hauptbindemittel Zement bzw. Zementersatzstoffe wie beispielsweise Silikastaub, Hochofenschlacke oder Flugasche und als Nebenbestandteil gegebenenfalls noch Kalk, Gips oder Anhydrit enthalten. Es ist aber auch möglich, dass als Hauptbindemittel Calciumsulfat in Form von beispielsweise Gips, Anhydrit oder Halbhydrat und als Nebenbestandteil Zement, Silikastaub, Hochofenschlacke oder Flugasche zum Einsatz kommen.

Es ist im Rahmen der vorliegenden Erfindung jedoch auch möglich, dass die erfindungsgemäßen Zusatzmittel dem Anmachwasser bzw. Restwasser in emulgierter Form mit Hilfe von externen Emulgatoren (beispielsweise ethoxylierte Verbindungen, wie Fettsäureethoxylat, ethoxyliertes Rizinusöl oder ethoxyliertes Fettamin) zugesetzt werden.

Die erfindungsgemäß vorgeschlagenen Polymer-Verbindungen eignen sich hervorragend als Mittel zur Verhinderung bzw. Unterdrückung von Ausblühungen auf Oberflächen von gehärteten hydraulisch abbindbaren Baustoffmassen oder/und zur Hydrophobierung der entsprechenden zementären Systeme.

Außerdem nehmen die hydraulisch abbindbaren Produkte durch die erfindungsgemäß vorgeschlagenen Zusatzmittel deutlich weniger Wasser auf, wodurch sich Frostschäden und eine schnelle Verrostung des Bewehrungsstahls deutlich reduzieren lassen.

Die nachfolgenden Beispiele sollen die Erfindung näher veranschaulichen.

### Beispiele

### Beispiel 1

629,8 g (2,1717 mol) Tallölfettsäure (Fa. Hanf & Nelles) bei Raumtemperatur im Reaktionsgefäß vorlegen, 369,2 g (1,0859 mol) Bisphenol A diglycidylether (Handelsname: Polypox E 270/500; Fa. UPPC) zugeben und anschließend 1,0g (0,0031 mol) Tetrabutylammoniumbromid (Fa. Aldrich) hinzufügen. Der Reaktionsraum wird mit Stickstoff gespült und das Reaktionsgemisch auf 150°C erwärmt. Bei dieser Temperatur wird gehalten, bis eine Säurezahl < 2 erreicht ist.
Reaktionsdauer: ca. 8 h.

### Beispiel 1 A

74,9 g (0,3369 mol) Isophorondiisocyanat (IPDI; Fa. Aldrich) bei Raumtemperatur im Reaktionsgefäß vorlegen und 4 Tropfen T12-DBTL (Katalysator; Fa. Aldrich) zugeben. Vorlage im Reaktionsgefäß auf 40°C erwärmen und 155,0 g (0,1685 mol) des Fettsäureadduktes aus Beispiel 1 über ca. 60 min zudosieren. Die Reaktionstemperatur wird zwischen 40-50° C gehalten. Nach vollständiger Zugabe des Fettsäureadduktes aus Beispiel 1 solange reagieren lassen, bis der für diese Stufe theoretische NCO-Wert (6,15 Gew.-%) erreicht ist.
Ist der NCO-Sollwert erreicht, werden 168,5 g (0,1685 mol) MPEG 1000 (Handelsname: Polyglycol M 1000; Fa. Clariant) zudosiert. Die Reaktionstemperatur wird zwischen 50-60°C gehalten. Nach vollständiger Zugabe des MPEG 1000 solange reagieren lassen, bis der für diese Stufe theoretische NCO-Wert (1,78 Gew.-%) erreicht ist.
ist der NCO-Sollwert erreicht, werden 37,3 g (0,1685 mol) 3-Aminopropyltriethoxysilan (Handelsname: Dynasylan AMEO; Fa. Degussa) zudosiert und die Temperatur des Reaktionsgemisches auf 50-60°C gehalten. Anschließend wird nachgerührt, bis der NCO-Wert auf Null abgefallen ist.
Das Reaktionsprodukt wird mit 2469,0g Leitungswasser unter guter Rührwirkung vermischt, bis eine homogene gelbliche fast klare Lösung (Feststoffgehalt 15 Gew.-%) entsteht. Anschließend wird mit Essigsäure (98 %; Fa. Aldrich) ein pH von 4,0--4,5 eingestellt.

### Beispiel 1 B

80,0 g (0,3600 mol) Isophorondiisocyanat (IPDI; Fa. Aldrich) bei Raumtemperatur im Reaktionsgefäß vorlegen und 4 Tropfen T12-DBTL (Katalysator; Fa. Aldrich) zugeben. Vorlage im Reaktionsgefäß auf 40°C erwärmen und 165,6 g (0,1800 mol) des Fettsäureadduktes aus Beispiel 1 über ca. 60 min zudosieren. Die Reaktionstemperatur wird zwischen 40-50° C gehalten. Nach vollständiger Zugabe des Fettsäureadduktes aus Beispiel 1 solange reagieren lassen, bis der für diese Stufe theoretische NCO-Wert (6,16 Gew.-%) erreicht ist.
Ist der NCO-Sollwert erreicht, werden 180,0 g (0,1800 mol) MPEG 1000 (Handelsname: Polyglycol M 1000; Fa. Clariant) zudosiert. Die Reaktionstemperatur wird zwischen 50-60°C gehalten. Nach vollständiger Zugabe des MPEG 1000 solange reagieren lassen, bis der für diese Stufe theoretische NCO-Wert (1,78 Gew.-%) erreicht ist.
Ist der NCO-Sollwert erreicht, werden 23,3 g (0,1800 mol) Dibutylamin (Fa. Aldrich) zudosiert und die Temperatur des Reaktionsgemisches auf 50-60°C gehalten. Anschließend wird nachgerührt, bis der NCO-Wert auf Null abgefallen ist.
Das Reaktionsprodukt wird mit 2543,8 g Leitungswasser unter guter Rührwirkung vermischt, bis eine homogene gelbliche fast klare Lösung (Feststoffgehalt 15 Gew.-%) entsteht.

### Beispiel 1 C

160,0 g (0,1739 mol) des Fettsäureadduktes aus Beispiel 1 bei 50°C im Reaktionsgefäß vorlegen und 4 Tropfen T12-DBTL (Katalysator; Fa. Aldrich) zugeben. Vorlage im Reaktionsgefäß bei 50°C halten und 1/3 (15,1 g; 0,0870 mol) der Toluoldiisocyanat Menge (TDI; Fa. Aldrich) über ca. 40 min zudosieren. Die Reaktionstemperatur wird bei 50-60°C gehalten. Nach Zugabe der 1. Toluoldiisocyanat Menge solange reagieren lassen, bis der NCO-Wert auf Null abgefallen ist.
Ist der NCO-Wert auf Null abgefallen, werden die restlichen 2/3 (30,3 g; 0,1739 mol) der Toluoldiisocyanat (TDI) Menge auf einmal zugegeben. Die Reaktionstemperatur wird zwischen 60-70°C gehalten und man "lässt, solange reagieren, bis der für diese Stufe theoretische NCO-Wert (3,55 Gew.-%) erreicht ist. Anschließend werden 174,0 g (0,0870 mol) MPEG 2000 (Handelsname: Polyglycol M 2000; Fa. Clariant) über 60 min zudosiert, die Temperatur wird bei 60-70°C gehalten. Nach vollständiger Zugabe des MPEG 2000 solange reagieren lassen, bis der für diese Stufe theoretische NCO-Wert (0,96 Gew.-%) erreicht ist.
Ist der NCO-Sollwert erreicht, werden 19,3 g (0,0870 mol) 3-Aminopropyltriethoxysilan (Handelsname: Dynasylan AMEO; Fa. Degussa) zudosiert und die Temperatur des Reaktionsgemisches auf 50-60°C gehalten. Anschließend wird nachgerührt, bis der NCO-Wert auf Null abgefallen ist. Das Reaktionsprodukt wird mit 2259,3 g Leitungswasser unter guter Rührwirkung vermischt, bis eine homogene gelbliche fast klare Lösung (Feststoffgehalt 15 Gew.-%) entsteht. Anschließend wird mit Essigsäure (98%; Fa. Aldrich) ein pH von 4,0-4,5 eingestellt.

### Beispiel 2

631,8 g (2,2524 mol) Sonnenblumenölfettsäure (Fa. Hanf & Nelles) bei Raumtemperatur im Reaktionsgefäß vorlegen, 367,2 g (0,5632 mol) Pentaerythrittetraglycidylether (Handelsname: Polypox R16; Fa. UPPC) zugeben, anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150°C erwärmt. Bei dieser Temperatur wird gehalten, bis eine Säurezahl < 2 erreicht ist.
Reaktionsdauer: ca. 10h.

### Beispiel 2 A

80,0 g (0,3600 mol) Isophorondüsocyanat (IPDI; Fa. Aldrich) bei Raumtemperatur im Reaktionsgefäß vorlegen und 4 Tropfen T12-DBTL (katalysators Fa. Aldrich) zugeben. Vorlage im Reaktionsgefäß auf 40°C erwärmen und 159,7.g (0,0900 mol) des Fettsäureadduktes aus Beispiel 2 über ca. 60 min zudosieren. Die Reaktionstemperatur wird zwischen 40-50° C gehalten. Nach vollständiger Zugabe des Fettsäureadduktes aus Beispiel 2 solange reagieren lassen, bis der für diese Stufe theoretische NCO-Wert (6,30 Gew.-%) erreicht ist.
Ist der NCO-Sollwert erreicht, werden 202,5 g (0,2700 mol) MPEG 750 (Handelsname: Polyglycol M 750; Fa. Clariant) zudosiert. Die Reaktionstemperatur wird zwischen 50-60°C gehalten. Nach vollständiger Zugabe des MPEG 750 solange reagieren lassen, bis der für diese Stufe theoretische NCO-Wert (0,85 Gew.-%) erreicht ist.
Ist der NCO-Sollwert erreicht, werden 16,1 g (0,0900 mol) 3-Aminopropyltrimethoxysilan (Handelsname: Dynasylan AMMO; Fa. Degussa) zudosiert und die Temperatur, des Reaktionsgemisches auf 50-60°C gehalten. Anschließend wird nachgerührt, bis der NCO-Wert auf Null abgefallen ist. Das Reaktionsprodukt wird mit 2597,0 g Leitungswasser unter guter Rührwirkung vermischt, bis eine homogene bräunlich trübe Dispersion (Feststoffgehalt 15 Gew.-%) entsteht. Anschließend wird mit Essigsäure (98%; Fa. Aldrich) ein pH von 4,0-4,5 eingestellt.

### Beispiel 3

666,0 g (2,2966 mol) Tallölfettsäure (Fa. Hanf & Nelles) bei Raumtemperatur im Reaktionsgefäß vorlegen, 333,0 g (0,7655 mol) Trimethylolpropantriglycidylether (Handelsname: Polypox R 20; Fa. UPPC) zugeben, anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150°C erwärmt. Bei dieser Temperatur wird gehalten, bis eine Säurezahl < 2 erreicht ist.
Reaktionsdauer: ca. 9 h.

### Beispiel 3 A

43,4 g (0,1952 mol) Isophorondiisocyanat (IPDI; Fa. Aldrich) bei Raumtemperatur im Reaktionsgefäß vorlegen und 4 Tropfen T12-DBTL (Katalysator; Fa. Aldrich) zugeben. Vorlage im Reaktionsgefäß auf 40°C erwärmen und 85,0 g (0,0651 mol) des Fettsäureadduktes aus Beispiel 3 über ca. 60 min zudosieren. Die Reaktionstemperatur wird zwischen 40-50° C gehalten. Nach vollständiger Zugabe des Fettsäureadduktes aus Beispiel 3 solange reagieren lassen, bis der für diese Stufe theoretische NCO-Wert (6,39 Gew.-%) erreicht ist.
Ist der NCO-Sollwert erreicht, werden 130,3 g (0,1303 mol) MPEG 1000 (Handelsname: Polyglycol M 1000; Fa. Clariant) zudosiert. Die Reaktionstemperatur wird zwischen 50-60°C gehalten. Nach vollständiger Zugabe des MPEG 1000 solange reagieren lassen, bis der für diese Stufe theoretische NCO-Wert (1,06 Gew.-%) erreicht ist.
Ist der NCO-Sollwert erreicht, werden 14,4 g (0,0651 mol) 3-Aminopropyltriethoxysilan (Handelsname: Dynasylan AMEO; Fa. Degussa) zudosiert und die Temperatur des Reaktionsgemisches auf 50-60°C gehalten. Anschließend wird nachgerührt, bis der NCO-Wert auf Null abgefallen ist. Das Reaktionsprodukt wird mit 1547,6 g Leitungswasser unter guter Rührwirkung vermischt, bis eine homogene orange trübe Dispersion (Feststoffgehalt 15 Gew.-%) entsteht. Anschließend wird mit Essigsäure (98 %; Fa. Aldrich) ein pH von 4,0-4,5 eingestellt.

### Beispiel 4

643,4 g (2,2938 mol) Leinölfettsäure (Fa. Hanf & Nelles) bei Raumtemperatur im Reaktionsgefäß vorlegen, 355,6g (1,1471 mol) Neopentylglycoldiglycidylether (Handelsname: Polypox R14; Fa. UPPC) zugeben, anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150°C erwärmt. Bei dieser Temperatur wird gehalten, bis eine Säurezahl < 2 erreicht ist.
Reaktionsdauer: ca. 8 h.

### Beispiel 4 A

88,8 g (0,4000 mol) Isophorondüsocyanat (IPDI; Fa. Aldrich) bei Raumtemperatur im Reaktionsgefäß vorlegen und 4 Tropfen T12-DBTL (Katalysator, Fa. Aldrich) zugeben. Vorlage im Reaktionsgefäß auf 50°C erwärmen und 174,2 g (0,2000 mol) des Fettsäureadduktes aus Beispiel 4 über ca. 60 min zudosieren. Nach vollständiger Zugabe des Fettsäureadduktes aus Beispiel 4 solange bei ca. 50°C reagieren lassen, bis der für diese Stufe theoretische NCO-Wert (6,39 Gew.-%) erreicht ist.
Ist der NCO-Sollwert erreicht, werden 200,0 g (0,2000 mol) MPEG 1000 (Handelsname: Polyglycol M 1000; Fa. Clariant) zudosiert. Die Reaktionstemperatur wird zwischen 50-60°C gehalten. Nach vollständiger Zugabe des MPEG 1000 solange reagieren lassen, bis der für diese Stufe theoretische NCO-Wert (1,81 Gew.-%) erreicht ist.
Ist der NCO-Sollwert erreicht, werden 35,8 g (0,2000 mol) 3-Aminopropyltrimethoxysilan (Handelsname: Dynasylan AMMO; Fa. Degussa) zudosiert und die Temperatur des Reaktionsgemisches auf 50-60°C gehalten. Anschließend wird nachgerührt, bis der NCO-Wert auf Null abgefallen ist. Das Reaktionsprodukt wird mit 2826,5 g Leitungswasser unter guter Rührwirkung vermischt, bis eine homogene gelbliche fast klare Lösung (Feststoffgehalt 15 Gew.-%) entsteht. Anschließend wird mit Essigsäure (98 %; Fa. Aldrich) ein pH von 4,0-4,5 eingestellt.

### Beispiel 4 B

88,8 g (0,4000 mol) Isophorondüsocyanat (IPDI; Fa. Aldrich) bei Raumtemperatur im Reaktionsgefäß vorlegen und 4 Tropfen T12-DBTL (Katalysator; Fa. Aldrich) zugeben. Vorlage im Reaktionsgefäß auf 50°C erwärmen und 174,2 g (0,2000 mol) des Fettsäureadduktes aus Beispiel 4 über ca. 60 min zudosieren. Nach vollständiger Zugabe des Fettsäureadduktes aus Beispiel 4 solange bei ca. 50°C reagieren lassen, bis der für diese Stufe theoretische NCO-Wert (6,39 Gew.-%) erreicht ist.
Ist der NCO-Sollwert erreicht, werden 25,9 g (0,2000 mol) Dibutylamin (Fa. Aldrich) langsam zudosiert. Die Reaktionstemperatur wird auf ca. 50°C gehalten. Nach vollständiger Zugabe des Dibutylamin solange reagieren lassen, bis der für diese Stufe theoretische NCO-Wert (2,91 Gew.-%) erreicht ist.
Ist der NCO-Sollwert erreicht, werden 200,0 g (0,2000 mol) MPEG 1000 (Handelsname: Polyglycol M 1000; Fa. Clariant) zudosiert. Die Reaktionstemperatur wird bei ca. 60°C gehalten. Nach vollständiger Zugabe des MPEG 1000 solange reagieren lassen, bis der NCO-Wert auf Null abgefallen ist.
Das Reaktionsprodukt wird mit 2770,4 g Leitungswasser unter guter Rührwirkung vermischt, bis eine homogene gelbliche fast klare Lösung (Feststoffgehalt 15 Gew.-%) entsteht. Anschließend wird mit Essigsäure (98 %; Fa. Aldrich) ein pH von 4,0-4,5 eingestellt.

### Beispiel 5

605,9 g (2,1601 mol) Sonnenblumenölfettsäure (Fa. Hanf & Nelles) bei Raumtemperatur im Reaktionsgefäß vorlegen, 39.3,1 g (1,0799 mol) Bisphenol A diglycidylether (Handelsname: Araldit GY 240; Fa. Huntsman) zugeben, anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150°C erwärmt. Bei dieser Temperatur wird gehalten, bis eine Säurezahl < 2 erreicht ist.
Reaktionsdauer: ca. 8 h.

### Beispiel 5 A

160,0 g (0,1730 mol) des Fettsäureadduktes aus Beispiel 5 bei 50°C im Reaktionsgefäß vorlegen und 3 Tropfen T12-DBTL (Katalysator; Fa. Aldrich) zugeben. Vorlage im Reaktionsgefäß bei 50°C halten und 1/3 (15,1 g; 0,0865 mol) der Toluoldiisocyanat Menge (TDI; Fa. Aldrich) über ca. 40 min zudosieren. Die Reaktionstemperatur wird bei 50-60°C gehalten. Nach Zugabe der 1. Toluoldiisocyanat Menge solange reagieren lassen, bis der NCO-Wert auf Null abgefallen ist.
In einem 2. Reaktionsgefäß wird ein weiteres Drittel (15,1 g; 0,0865 mol) der Toluoldiisocyanat Menge sowie 3 Tropfen T12-DBTL vorgelegt und bei 40°C gehalten. Anschließend werden 173,0 g (0,0865 mol) MPEG 2000 (Handelsname: Polyglycol M 2000; Fa. Clariant) über 60 min zudosiert. Nach vollständiger Zugabe des MPEG 2000 solange reagieren lassen, bis der für diese Stufe theoretische NCO-Wert (1,93 Gew.-%) erreicht ist.
In einem 3. Reaktionsgefäß wird das letzte Drittel (15,1 g; 0,0865 mol) der Toluoldiisocyanat Menge sowie 3 Tropfen T12-DBTL vorgelegt und bei 30°C gehalten. Anschließend werden 19,1 g (0,0865 mol) 3-Aminopropyltriethoxysilan (Handelsname: Dynasylan AMEO; Fa. Degussa) über 60 min zudosiert. Nach vollständiger Zugabe des 3-Aminopropyltriethoxysilan solange reagieren lassen, bis der für diese Stufe theoretische NCO-Wert (10,62 Gew.-%) erreicht ist.
Nun werden die Umsetzungsprodukte aus Reaktionsgefäß 2 und 3 zum Umsetzungsprodukt in Reaktionsgefäß 1 gegeben. Man lässt bei 40°C reagieren, bis der NCO-Wert auf Null abgefallen ist.
Das Reaktionsprodukt wird mit 2251,9 g Leitungswasser unter guter Rührwirkung vermischt, bis eine homogene gelbliche fast klare Lösung (Feststoffgehalt 15 Gew.-%) entsteht.

### Beispiel 5 B

In einem 1. Reaktionsgefäß werden 26,7 g (0,1200 mol) Isophorondiisocyanat (IPDI; Fa. Aldrich) bei Raumtemperatur vorlegt, 2 Tropfen T12-DBTL (Katalysator; Fa. Aldrich) zugeben und die Vorlage auf 60°C erwärmt. Anschließend werden 240,0 g (0,1200 mol) MPEG 2000 (Handelsname: Polyglycol M 2000; Fa. Clariant) über ca. 60 min zudosiert. Die Reaktionstemperatur wird bei 60°C gehalten bis der für diese Stufe theoretische NCO-Wert (1,89 Gew.-%) erreicht ist.
Ist der NCO-Sollwert erreicht, werden 111,0 g (0,1200 mol) des Fettsäureadduktes aus Beispiel 5 zugegeben. Man lässt bei 60°C reagieren, bis der NCO-Wert auf Null abgefallen ist.
In einem 2. Reaktionsgefäß werden 26,7 g (0,1200 mol) Isophorondüsocyanat (IPDI; Fa. Aldrich) bei Raumtemperatur vorlegt, 2 Tropfen T12-DBTL (Katalysator; Fa. Aldrich) zugeben und die Vorlage auf 40°C erwärmt. Anschließend werden 26,5 g (0,1200 mol) 3-Aminopropyltriethoxysilan (Handelsname: Dynasylan AMEO; Fa. Degussa) über ca. 60 min zudosiert. Die Reaktionstemperatur wird bei 40-50°C gehalten bis der für diese Stufe theoretische NCO-Wert (9,47 Gew.-%) erreicht ist.
Ist der NCO-Sollwert erreicht, werden 111,0 g (0,1200 mol) des Fettsäureadduktes aus Beispiel 5 zugegeben. Man läßt bei 40-50°C reagieren, bis der NCO-Wert auf Null abgefallen ist.
Anschließend gibt man das Umsetzungsprodukt aus Reaktionsgefäß 2 zu dem in Reaktionsgefäß 1 und hält die Mischung bei 60°C. Es werden 26,7 g (0,1200 mol) Isophorondüsocyanat über 15 min zudosiert. Man läßt bei 60°C reagieren, bis der NCO-Wert auf Null abgefallen ist.
Das Reaktionsprodukt wird mit 3222,1 g Leitungswasser unter guter Rührwirkung vermischt, bis eine homogene gelbliche fast klare Lösung (Feststoffgehalt 15 Gew.-%) entsteht. Anschließend wird mit Essigsäure (98 %; Fa. Aldrich) ein NH von 4,0-4,5 eingestellt.

### Abprüfung der hergestellten Produkte

Die Probekörper werden nach folgender Methode hergestellt und auf ihr Ausblühverhalten geprüft:

Normgemäß wird in einem Zwangsmischer eine Mischung (11 kg) nach folgender Rezeptur hergestellt, wobei zunächst alle Aggregate 10 sec trocken vermischt werden. Anschließend wird das Vorgabewasser zugegeben und 2 min gemischt, dann Zugabe des Restwassers, Mischdauer 2 min. Das Zusatzmittel wird dem Restwasser zugegeben:

| | |
|---|---|
| 380 kg/m³ | Zement (Bernburg CEM I 42,5 R; 380 kg/m³) |
| 1104 kg/m³ | Sand 0/2 |
| 296 kg/m³ | Kies 2/5 |
| 296 kg/m³ | Kies 5/8 |
| 137 kg/m³ | Wasser |
| w/z: | 0,36 |

Das Zusatzmittel wird in unterschiedlichen Dosierungen, bezogen auf den Zement in der Mischung, eingesetzt und entweder dem Restwasser oder der Betonmischung beigefügt. Die Angaben der Dosierung des Zusatzmittels beziehen sich immer auf Feststoff "Zusatzmittel" zu Feststoff "Zement". Der Wassergehalt des Zusatzmittels wird von der Menge des Anmachwassers abgezogen.

Zur Herstellung der Prüfkörper werden jeweils genau 1300 g der frischen Betonmischung in runde Formen gegeben und mit einem Auflagegeinricht von 30 kg auf einem Rütteltisch 90 sec verdichtet. Anschließend wird der frische Probekörper entschalt und 2 Tage in einer Klimakammer (20°C, 65% rel. LF) zur Aushärtung gelagert. Dann wird die Helligkeit der Probekörper mit einem Farbphotospektrometer (Color-Guide sphere spin, Byk Gardner) gemessen (L1), wobei auf die Probekörper eine Schablone mit 9 Messpunkten gelegt wird, damit später bei der 2. Messung die gleichen Punkte gemessen werden. Aus diesen 9 Punkten ergibt sich der Mittelwert L1. Im Anschluss werden die Steine für ca. 2 sec in dest. Wasser getaucht und feucht in einem Plastiksack luftdicht verpackt. Dieser Sack wird in der Klimakammer 10 Tage gelagert. Anschließend werden die Steine ausgepackt und 2 Tage zur Trocknung in der Klimakammer gelagert. Nun werden die Helligkeiten der Probekörper ein 2. Mal mit Schablone und Farbphotospektrometer gemessen (L 2). Je Mischung werden 6 Probekörper gefertigt (und daraus der Mittelwert gebildet). Die farbliche Veränderung der Oberfläche (ΔL) der Probekörper (Zunahme an Weißgrad) ergibt sich als: ΔL =L2-L1.

Neben der Aufhellung (AL) der Probekörper durch die Ausblühungen, wurde auch die Homogenität der Oberfläche beurteilt, sowie die Wasseraufnahme der Probekörper bestimmt. Die Bestimmung der Wasseraufnahme (WA) erfolgt in Anlehnung an EN ISO 15148. Die trockenen und ausgehärteten Probekörper werden gewogen (W1) und so in ein Wasserbad gestellt, daß die Unterseite auf den Punktauflagen aufliegt und den Behälterboden nicht berührt. Wasserspiegel ca. 5 mm über der höchsten Stelle der Unterseite. Nach 15 min werden die Probekörper aus dem Wasserbad genommen und ein 2. Mal gewogen (W2). Der Prüfkörper wird vorher mit einem feuchten, ausgewrungenen Schwamm abgetrocknet. Die Wasseraufnahme ergibt sich als: WA = W2 - W1.

**Tabelle 1 (Beschleunigte Ausblühung in der Klimakammer, 20°C, 65% rel. LF)**

| Beispiel | Dosierung | Helligkeitsdifferenz | Wasseraufnahme | Beurteilung der Oberfläche |
|---|---|---|---|---|
| | [Gew.-%] | ΔL | WA [g] | |
| 1A | 0,25 | 0,8 (7,9) -90% | 3,5 (58,0) -94% | einwandfrei |
| | 0,10 | 0,9 (7,9) -89% | 4,0 (58,0) -93% | einwandfrei |
| 1B | 0,25 | 0,9 (7,9) -89% | 3,2 (58,0) -94% | einwandfrei |
| | 0,10 | 1,0 (7,9) -87% | 3,5 (58,0) -94% | einwandfrei |
| 1C | 0,25 | 0,7 (7,9) -91% | 2,9 (58,0) -95% | einwandfrei |
| | 0,10 | 0,8 (7,9) -90% | 3,3 (58,0) -94% | einwandfrei |
| 2A | 0,25 | 0,9 (9,0) -90% | 4,3 (52.7) -92% | einwandfrei |
| | 0,10 | 1,0 (9,0) -89% | 4,8 (52,7) -91% | einwandfrei |
| 3A | 0,25 | 0,8 (8,2) -90% | 3,9 (48,3) -92% | einwandfrei |
| | 0,10 | 0,9 (8,2) -89% | 5,0 (48,3) -90% | einwandfrei |
| 4A | 0,25 | 0,6 (8,7) -93% | 2,7 (51,1) -95% | einwandfrei |
| | 0,10 | 0,8 (8,7) -91% | 3,1 (51,1) -94% | einwandfrei |
| 4B | 0,25 | 0,7 (8,7) -92% | 2,5 (51,1) -95% | einwandfrei |
| | 0,10 | 0,9 (8.7) -90% | 3,0 (51,1) -94% | einwandfrei |
| 5A | 0,25 | 0,7 (7,8) -91% | 2,7 (54.7) -95% | einwandfrei |
| | 0,10 | 0,8 (7,8) -90% | 3,1 (54,7) -94% | einwandfrei |
| 5B | 0,25 | 0,6 (7,8) -92% | 2,4 (54,7) -96% | einwandfrei |
| | 0,10 | 0,7 (7,8) -91% | 2,8 (54,7) -95% | einwandfrei |

Die Werte in Klammern sind die Ergebnisse der Nullmischungen (ohne Zusatzmittel). Die Prozentwerte geben an, um wie viel das Zusatzmittel jeweils die Helligkeit bzw. die Wasseraufnahme im Vergleich zur Nullmischung (ohne Zusatzmittel) reduziert hat. Die Dosierungen geben den Feststoffanteil des Zusatzmittels bezogen auf den Zement in der Mischung an.

## Patentansprüche

1. Amphiphile Polymer-Verbindung, welche **dadurch** hergestellt wird, dass man
a) eine Di-, Tri- oder Tetraglycidyl-Verbindung (A) mit einer gegebenenfalls ungesättigten Reaktivkomponente (B), bestehend aus einer C₈-C₂₈-Fettsäure, einem C₈-C₂₈-Alkohol oder einem C₈-C₂₈-sekundären Amin umsetzt, und
b₁) das Umsetzungsprodukt aus Stufe a) zuerst mit
b_{1α}) einer aliphatischen oder aromatischen Polyisocyanat-Verbindung (C)
b_{1β}) und gegebenenfalls anschließend mit einer Polyalkylenoxid-Verbindung (D) der allgemeinen Formel (I) 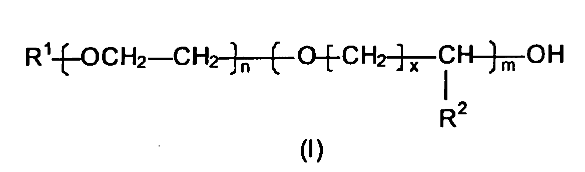 wobei
R¹ = H, einen linearen oder verzweigten und ggf. ungesättigten aliphatischen Kohlenwasserstoff-Rest mit 1 bis 12 C-Atomen,
R² = einen linearen oder verzweigten und ggf. ungesättigten aliphati- schen Kohlenwasserstoff-Rest mit 1 bis 30 C-Atomen oder Phenyl darstellen,
m = 0 bis 250,
n = 3 bis 250 und
x = 1 bis 12
bedeuten,
und die Ethylenoxid- bzw. höheren Alkylenoxid-Einheiten in der Polyalkylenoxid-Verbindung (D) beliebig verteilt sein können, weiterreagieren lässt, und
b_{1γ}) das Umsetzungsprodukt aus Stufe b_{1α}) oder gegebenenfalls b_{1β}) mit einer gegenüber Isocyanaten reaktiven, mindestens eine OH-, NH₂-, NH- oder SH-Gruppe aufweisende Komponente (E) zur Reaktion bringt, oder
b₂) das Umsetzungsprodukt aus Stufe a) mit dem Umsetzungsprodukt von Komponente (C) mit Komponente (E) sowie gegebenenfalls (D) und (C), oder
b₃) das Umsetzungsprodukt aus Stufe a) mit dem Reaktionsprodukt von Komponente (C) und (D) sowie gegebenenfalls (C) und gegebenenfalls dem Reaktionsprodukt von Komponente (C) und (E) sowie gegebenenfalls (C)
fertigreagieren lässt,
mit der Maßgabe, dass die amphiphile Polymer-Verbindung nicht durch Umsetzung eines Reaktionsproduktes von Neopentylglycoldiglycidylether und Sonnenblumenölfettsäure mit einem Reaktionsprodukt von 1-Iso-cyanato-5-isocyanatomethyl-3,3,5-trimethyl-cyclohexan und Methoxypolyethylenglykol 1000 hergestellt wird.

2. Polymer-Verbindung nach Anspruch 1, **dadurch gekennzeichnet, dass** als Komponente (A) eine Glycidyl-Verbindung ausgewählt aus der Gruppe bestehend aus Cyclohexan-dimethanol-diglycidylether, Glycerin-triglycidylether, Neopentylglycol-diglycidylether, Pentaerythrit-tetraglycidylether, 1,6-Hexandiol-diglycidylether, Polypropylenglycol-diglycidylether, Polyethylenglycol-diglycidylether, Trimethylolpropan-triglycidylether, Bisphenol A-diglycidylether, Bisphenol F-diglycidylether, 4,4'-Methylenbis-(N,N-diglycidylanilin), Tetraphenylolethan-glycidylether, N,N-Diglycidylanilin, Diethylenglycol-diglycidylether und 1,4-Butandiol-diglycidylether, bzw. eine Mischung daraus eingesetzt wird.

3. Polymer-Verbindung nach Anspruch 1 oder 2, **dadurch gekennzeichnet, dass** als Reaktivkomponente (B) Fettsäuren aus der Gruppe bestehend aus Tallölfettsäure, Stearinsäure, Palmitinsäure, Sonnenblumenölfettsäure, Kokosölfettsäure (C₈-C₁₈), Kokosölfettsäure (C₁₂-C₁₈), Sojaölfettsäure, Leinölfettsäure, Dodecansäure, Ölsäure, Linolsäure, Palmkernölfettsäure, Palmölfettsäure, Linolensäure und Arachidonsäure verwendet werden.

4. Polymer-Verbindung nach einem der Ansprüche 1 bis 3, **dadurch gekennzeichnet, dass** als Reaktivkomponente (B) Alkanole aus der Gruppe bestehend aus 1-Eicosanol, 1-Octadecanol, 1-Hexadecanol, 1-Tetradecanol, 1-Dodecanol, 1-Decanol und 1-Octanol eingesetzt werden.

5. Polymer-Verbindung nach einem der Ansprüche 1 bis 4, **dadurch gekennzeichnet, dass** als Reaktivkomponente (B) Dialkylamine aus der Gruppe bestehend aus 2-Ethylhexylamin, Dipentylamin, Dihexylamin, Dioctylamin, Bis-(2-ethylhexyl)amin, N-Methyloctadecylamin und Didecylamin eingesetzt werden.

6. Polymer-Verbindung nach einem der Ansprüche 1 bis 5, **dadurch gekennzeichnet, dass** pro Mol der Glycidyl-Gruppen von Komponente (A) 0,9 bis 1,1 Mol der Reaktivkomponente (B) eingesetzt werden.

7. Polymer-Verbindung nach einem der Ansprüche 1 bis 6, **dadurch gekennzeichnet, dass** als aliphatisches Polyisocyanat 1-Isocyanato-5-isocyanatomethyl-3,3,5-trimethyl-cyclohexan (IPDI), Bis-(4-isocyanato-cyclohexyl)-methan (H12MDI), 1,3-Bis-(1-isocyanato-1-methyl-ethyl)-benzol (m-TMXDI), 1,6-Diisocyanatohexan (HDI), gegebenenfalls dessen höhere Homologe, bzw. ein technisches Isomerengemisch der einzelnen aliphatischen Polyisocyanate verwendet wird.

8. Polymer-Verbindung nach einem der Ansprüche 1 bis 6, **dadurch gekennzeichnet, dass** als aromatisches Polyisocyanat 2,4-Diisocyanatotoluol (TDI), Bis-(4-isocyanatophenyl)-methan (MDI) und gegebenenfalls dessen höhere Homologe (Polymeric MDI), bzw. ein technisches Isomerengemisch der einzelnen aromatischen Polyisocyanate eingesetzt wird.

9. Polymer-Verbindung nach einem der Ansprüche 1 bis 8, **dadurch gekennzeichnet, dass** die Polyisocyanat-Verbindung in einer solchen Menge eingesetzt wird, dass das NCO/OH-Äquivalent-Verhältnis bzgl. der freien OH-Gruppe im Umsetzungsprodukt von Glycidyl-Komponente (A) und Reaktivkomponente (B) aus Stufe a) 0,5 bis 2,0 beträgt.

10. Polymer-Verbindung nach einem der Ansprüche 1 bis 9, **dadurch gekennzeichnet, dass** in Formel (I) bezüglich der Polyalkylenoxid-Verbindung (D) R für -CH₃, CH=CH₂- oder CH₂=CH-CH₂- steht.

11. Polymer-Verbindung nach einem der Ansprüche 1 bis 10, **dadurch gekennzeichnet, dass** man die Polyalkylenoxid-Verbindung (D) in einer Menge von 0,4 bis 0,6 Mol pro Mol an freien Isocyanat-Gruppen der Umsetzungsprodukte in Stufe b) beziehungsweise der Polyisocyanat-Verbindung (C) verwendet.

12. Polymer-Verbindung nach einem der Ansprüche 1 bis 11, **dadurch gekennzeichnet, dass** man als Komponente (E) aliphatische Alkohole, primäre oder sekundäre Amine sowie Thiole mit jeweils 1 bis 12 C-Atomen, oder aromatische Alkohole, primäre oder sekundäre Amine sowie Thiole mit 6 bis 10 C-Atomen einsetzt.

13. Polymer-Verbindung nach einem der Ansprüche 1 bis 11, **dadurch gekennzeichnet, dass** man als Komponente (E) Amino- oder Mercapto-Silane ausgewählt aus der Gruppe bestehend aus 3-Aminopropyltriethoxysilan, 3-Aminopropyltrimethoxysilan, 2-Aminoethyl-3-aminopropyltrimethoxysilan, Bis-(3-triethoxysilylpropyl)amin, Bis-(3-trimethoxysilylpropyl)amin, N-(n-Butyl)-3-aminopropyl-trimethoxysilan, N-(2-Aminoethyl)-3-aminopropylmethyldimethoxysilan, 3-Aminopropylmethyldiethoxysilan, 3-Mercaptopropyltrimethoxysilan und 3-Mercaptopropyltriethoxysilan verwendet.

14. Polymer-Verbindung nach einem der Ansprüche 1 bis 13, **dadurch gekennzeichnet, dass** man die Komponente (E) in einer Menge von 0,4 bis 0,6 Mol pro Mol an freien Isocyanat-Gruppen der Reaktionsprodukte in Stufe b_{1α}) beziehungsweise b_{1β}) einsetzt.

15. Verfahren zur Herstellung einer Polymer-Verbindung nach einem der Ansprüche 1 bis 14, **dadurch gekennzeichnet, dass** man
a) die Glycidyl-Komponente (A) mit der Reaktivkomponente (B) bei Temperaturen von 20 bis 250°C, gegebenenfalls in Gegenwart eines sauren oder basischen Katalysators, umsetzt und
b₁) das Umsetzungsprodukt aus Stufe a) mit
b_{1α}) zuerst der Polyisocyanat-Komponente (C) ohne Lösemittel im Temperaturenbereich von 20 bis 120°C
b_{1β}) und gegebenenfalls anschließend mit der Polyalkylenoxid-Verbindung (D) bei Temperaturen von 20 bis 150°C
weiterreagieren lässt, und
b_{1γ}) das Umsetzungsprodukt aus Stufe b_{1α}) oder gegebenenfalls b_{1β}) mit der Komponente (E) bei Temperaturen von 20 bis 150°C zur Reaktion bringt, oder
b₂) das Umsetzungsprodukt aus Stufe a) mit dem Umsetzungsprodukt von Komponente (C) mit Komponente (E) sowie gegebenenfalls (D) und (C), oder
b₃) das Umsetzungsprodukt aus Stufe a) mit dem Reaktionsprodukt von Komponente (C) und Komponente (D) sowie gegebenenfalls (C) und gegebenenfalls dem Reaktionsprodukt von Komponente (C) und Komponente (E) sowie gegebenenfalls (C)
fertigreagieren lässt,
mit der Maßgabe, dass die amphiphile Polymer-Verbindung nicht durch Umsetzung eines Reaktionsproduktes von Neopentylglycoldiglycidylether und Sonnenblumenölfettsäure mit einem Reaktionsprodukt von 1-Isocyanato-5-isocyanatomethyl-3,3,5-trimethyl-cyclohexan und Methoxypolyethylenglykol 1000 hergestellt wird.

16. Verfahren nach Anspruch 15, **dadurch gekennzeichnet, dass** man
a) die Glycidyl-Komponente (A) mit der Reaktivkomponente (B) umsetzt, daraufhin
b_{1α}) das Umsetzungsprodukt aus Stufe a) mit der Polyisocyanat-Komponente (C) weiterreagieren lässt, danach
b_{1β}) das Umsetzungsprodukt aus Stufe b_{1α}) mit der Polyalkylenoxid-Verbindung (D) ohne Lösemittel bei Temperaturen von 20 bis 150°C zur Reaktion bringt, und schließlich
b_{1γ}) das Umsetzungsprodukt aus Stufe b_{1β}) mit der Komponente (E) ohne Lösemittel bei Temperaturen von 20 bis 150°C fertigreagieren lässt.

17. Verfahren nach Anspruch 15, **dadurch gekennzeichnet, dass** man
a) die Glycidyl-Komponente (A) mit der Reaktivkomponente (B) umsetzt und anschließend
b_{1α}) das Umsetzungsprodukt aus Stufe a) mit der Polyisocyanat-Komponente (C) weiterreagieren lässt und
b_{1β}) das Umsetzungsprodukt aus Stufe b_{1α}) entweder nacheinander oder gleichzeitig mit der Polyalkylenoxid-Verbindung (D) und der gegenüber Isocyanaten reaktiven Komponente (E) fertigreagieren lässt.

18. Verfahren nach Anspruch 15, **dadurch gekennzeichnet, dass** man
a) die Glycidyl-Komponente (A) mit der Reaktivkomponente (B) umsetzt und anschließend
b₂) das Umsetzungsprodukt aus Stufe a) mit dem Reaktionsprodukt von Komponente (C) mit Komponente (E) sowie gegebenenfalls Komponente (D) und (C) fertigreagieren lässt.

19. Verfahren nach Anspruch 15, **dadurch gekennzeichnet, dass** man
a) die Glycidyl-Komponente (A) mit der Reaktivkomponente (B) umsetzt und danach
b₃) das Umsetzungsprodukt aus Stufe a) mit dem Reaktionsprodukt von Komponente (C) und Komponente (D) sowie gegebenenfalls (C) und gegebenenfalls dem Reaktionsprodukt von Komponente (C) und Komponente (E) sowie gegebenenfalls (C) fertigreagieren lässt.

20. Verwendung einer Polymer-Verbindung nach einem der Ansprüche 1 bis 14 zur Massenhydrophobierung von hydraulisch abbindbaren Baustoffmassen.

21. Verwendung nach Anspruch 20, **dadurch gekennzeichnet, dass** die Polymer-Verbindungen zur Unterdrückung von Ausblühungen auf Oberflächen von gehärteten, hydraulisch abbindbaren Baustoffmassen eingesetzt werden.

22. Verwendung nach einem der Ansprüche 20 oder 21, **dadurch gekennzeichnet, dass** die Polymer-Verbindungen der nicht ausgehärteten, hydraulisch abbindbaren Baustoffmasse in einer Menge von 0,001 bis 5 Gew.-%, bezogen auf den Bindemittelanteil, zugesetzt werden.

## Claims

1. Amphiphilic polymer compound which is prepared by
a) reacting a di-, tri- or tetraglycidyl compound (A) with an optionally unsaturated reactive component (B) consisting of a C₈-C₂₈-fatty acid, a C₈-C₂₈-alcohol or a secondary C₈-C₂₈-amine, and allowing
b₁) the reaction product from stage a) to react further first with
b_{1α}) an aliphatic or aromatic polyisocyanate compound (C)
b_{1β}) and optionally then with a polyalkylene oxide compound (D) of the general formula (I) 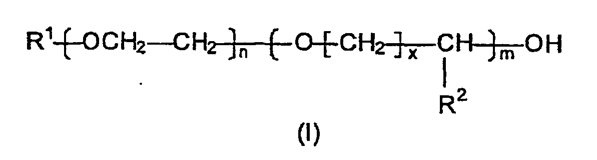 in which
R¹ is H or a linear or branched and optionally unsaturated aliphatic hydrocarbon radical having 1 to 12 C atoms,
R² is a linear or branched and optionally unsaturated aliphatic hydrocarbon radical having 1 to 30 C atoms or phenyl,
m is from 0 to 250,
n is from 3 to 250 and
x is from 1 to 12,
and the ethylene oxide or higher alkylene oxide units can be arbitrarily distributed in the polyalkylene oxide compound (D), and
b_{1γ}) reacting the reaction product from stage b_{1α}) or optionally b_{1β}) with a component (E) which is reactive towards isocyanates and has at least one OH, NH₂, NH or SH group, or
b₂) allowing the reaction product from stage a) to react to completion with the reaction product of component (C) with component (E) and optionally (D) and (C), or
b₃) allowing the reaction product from stage a) to react to completion with the reaction product from component (C) and (D) and optionally (C) and optionally the reaction product of component (C) and (E) and optionally (C),
with the proviso that the amphiphilic polymer compound is not prepared by reacting a reaction product of neopentylglycol diglycidyl ether and sunflower oil fatty acid with a reaction product of 1-isocyanato-5-isocyanatomethyl-3,3,5-trimethylcyclohexane and methoxypolyethylene glycol 1000.

2. Polymer compound according to Claim 1, **characterized in that** a glycidyl compound selected from the group consisting of cyclohexanedimethanol diglycidyl ether, glyceryl triglycidyl ether, neopentyl glycol diglycidyl ether, pentaerythrityl tetraglycidyl ether, 1,6-hexanediol diglycidyl ether, polypropylene glycol diglycidyl ether, polyethylene glycol diglycidyl ether, trimethylolpropane triglycidyl ether, bisphenol A diglycidyl ether, bisphenol F diglycidyl ether, 4,4'-methylenebis(N,N-diglycidylaniline), tetraphenylolethane glycidyl ether, N,N-diglycidylaniline, diethylene glycol diglycidyl ether and 1,4-butanediol diglycidyl ether, or a mixture thereof is used as component (A).

3. Polymer compound according to Claim 1 or 2, **characterized in that** fatty acids from the group consisting of tall oil fatty acid, stearic acid, palmitic acid, sunflower oil fatty acid, coconut oil fatty acid (C₈-C₁₈) , coconut oil fatty acid (C₁₂-C₁₈), soybean oil fatty acid, linseed oil fatty acid, dodecanoic acid, oleic acid, linoleic acid, palm kernel oil fatty acid, palm oil fatty acid, linolenic acid and arachidonic acid are used as reactive component (B).

4. Polymer compound according to any of Claims 1 to 3, **characterized in that** alkanols from the group consisting of 1-eicosanol, 1-octadecanol, 1-hexadecanol, 1-tetradecanol, 1-dodecanol, 1-decanol and 1-ocatanol are used as reactive component (B).

5. Polymer compound according to any of Claims 1 to 4, **characterized in that** dialkylamines from the group consisting of 2-ethylhexylamine, dipentylamine, dihexylamine, dioctylamine, bis (2-ethylhexyl)amine, N-methyloctadecylamine and didecylamine are used as reactive component (B).

6. Polymer compound according to any of Claims 1 to 5, **characterized in that** from 0.9 to 1.1 mol of the reactive component (B) are used per mole of the glycidyl groups of component (A).

7. Polymer compound according to any of Claims 1 to 6, **characterized in that** 1-isocyanato-5-isocyanatomethyl-3,3,5-trimethylcyclohexane (IPDI), bis(4-isocyanatocyclohexyl)methane (H12MDI), 1,3-bis(1-isocyanato-1-methylethyl)benzene (m-TMXDI), 1,6-diisocyanatohexane (HDI), optionally the higher homologs thereof or an industrial isomer mixture of the individual aliphatic polyisocyanates is used as the aliphatic polyisocyanate.

8. Polymer compound according to any of Claims 1 to 6, **characterized in that** 2,4-diisocyanatotoluene (TDI), bis(4-isocyanatophenyl)methane (MDI) and optionally the higher homologs thereof (polymeric MDI) or an industrial isomer mixture of the individual aromatic polyisocyanates is used as the aromatic polyisocyanate.

9. Polymer compound according to any of Claims 1 to 8, **characterized in that** the polyisocyanate compound is used in an amount such that the NCO/OH equivalent ratio, based on the free OH group in the reaction product of glycidyl component (A) and reactive component (B) from stage a), is from 0.5 to 2.0.

10. Polymer compound according to any of Claims 1 to 9, **characterized in that**, in formula (I) relating to the polyalkylene oxide compound (D), R is -CH₃, CH=CH₂- or CH₂=CH-CH₂-.

11. Polymer compound according to any of Claims 1 to 10, **characterized in that** the polyalkylene oxide compound (D) is used in an amount of from 0.4 to 0.6 mol per mole of free isocyanate groups of the reaction product in stage b) or of the polyisocyanate compound (C).

12. Polymer compound according to any of Claims 1 to 11, **characterized in that** aliphatic alcohols, primary or secondary amines and thiols having in each case 1 to 12 C atoms or aromatic alcohols, primary or secondary amines and thiols having 6 to 10 C atoms are used as component (E).

13. Polymer compound according to any of Claims 1 to 11, **characterized in that** amino- or mercaptosilanes selected from the group consisting of 3-aminopropyltriethoxysilane, 3-aminopropyltrimethoxysilane, 2-aminoethyl-3-aminopropyltrimethoxysilane, bis(3-triethoxysilylpropyl)amine, bis(3-trimethoxysilylpropyl)amine, N-(n-butyl)-3-aminopropyltrimethoxysilane, N-(2-aminoethyl)-3-aminopropylmethyldimethoxysilane, 3-aminopropylmethyldiethoxysilane, 3-mercaptopropyltrimethoxysilane and 3-mercaptopropyltriethoxysilane are used as component E).

14. Polymer compound according to any of Claims 1 to 13, **characterized in that** the component (E) is used in an amount of from 0.4 to 0.6 mol per mole of free isocyanate groups of the reaction products in stage b_{1α}) or b_{1β}).

15. Method for the production of a polymer compound according to any of Claims 1 to 14, **characterized in that**
a) the glycidyl component (A) is reacted with the reactive component (B) at temperatures of from 20 to 250°C, optionally in the presence of an acidic or basic catalyst, and
b₁) the reaction product from stage a) is allowed to react further with
b_{1α}) first the polyisocyanate component (C) without a solvent in the temperature range from 20 to 120°C,
b_{1β}) and optionally then with the polyalkylene oxide compound (D) at temperatures of from 20 to 150°C, and
b_{1γ}) the reaction product from stage b_{1α}) or optionally b_{1β}) is reacted with the component (E) at temperatures of from 20 to 150°C, or
b₂) the reaction product from stage a) is allowed to react to completion with the reaction product of component (C) with component (E) and optionally (D) and (C), or
b₃) the reaction product from stage a) is allowed to react to completion with the reaction product of component (C) and component (D) and optionally (C) and optionally the reaction product of component (C) and component (E) and optionally (C),
with the proviso that the amphiphilic polymer compound is not prepared by reacting a reaction product of neopentylglycol diglycidyl ether and sunflower oil fatty acid with a reaction product of 1-isocyanato-5-isocyanatomethyl-3,3,5-trimethylcyclohexane and methoxypolyethylene glycol 1000.

16. Method according to Claim 15, **characterized in that**
a) the glycidyl component (A) is reacted with the reactive component (B), thereafter
b_{1α}) the reaction product from stage a) is allowed to react further with the polyisocyanate component (C), then
b_{1β}) the reaction product from stage b_{1α}) is reacted with the polyalkylene oxide compound (D) without a solvent at temperatures of from
20 to 150°C, and finally b_{1γ}) the reaction product from stage b_{1β}) is
allowed to react to completion with the component (E) without a solvent at temperatures of from 20 to 150°C.

17. Method according to Claim 15, **characterized in that**
a) the glycidyl component (A) is reacted with the reactive component (B), and then
b_{1α}) the reaction product from stage a) is allowed to react further with the polyisocyanate component (C), and
b_{1β}) the reaction product from stage b_{1α}) is allowed to react to completion either in succession or simultaneously with the polyalkylene oxide compound (D) and the component (E) reactive toward isocyanates.

18. Method according to Claim 15, **characterized in that**
a) the glycidyl component (A) is reacted with the reactive component (B) and then
b₂) the reaction product from stage a) is allowed to react to completion with the reaction product of component (C) with component (E) and optionally components (D) and (C).

19. Method according to Claim 15, **characterized in that**
a) the glycidyl component (A) is reacted with the reactive component (B) and then
b₃) the reaction product from stage a) is allowed to react to completion with the reaction product of component (C) and component (D) and optionally (C) and optionally the reaction product of component (C) and component (E) and optionally (C).

20. Use of a polymer compound according to any of Claims 1 to 14 for the mass hydrophobization of hydraulically settable building materials.

21. Use according to Claim 20, **characterized in that** the polymer compounds are used for suppressing efflorescence on surfaces of hardened, hydraulically settable building materials.

22. Use according to either of Claims 20 and 21, **characterized in that** the polymer compounds are added to the unhardened, hydraulically settable building material in an amount of from 0.001 to 5% by weight, based on the proportion of binder.

## Revendications

1. Composé polymère amphiphile, qui est préparé
a) en faisant réagir un composé di-, tri- ou tétraglycidylique (A) avec un composant réactif (B) éventuellement insaturé, consistant en un acide gras en C₈-C₂₈, un alcool en C₈-C₂₈ ou une amine secondaire en C₈-C₂₈, et
b₁) en faisant de nouveau réagir le produit de réaction provenant de l'étape a) d'abord avec b_{1α}) un composé polyisocyanate aliphatique ou
aromatique (C)
b_{1β}) et éventuellement ensuite avec un composé polyoxyalkylène (D) de formule générale (I) 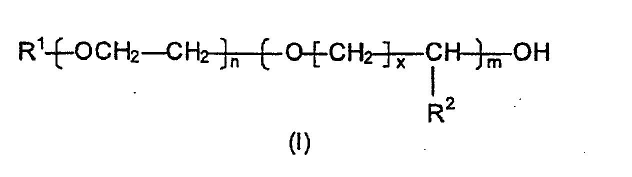 dans laquelle
R¹ représente H, un radical hydrocarboné aliphatique linéaire ou ramifié et éventuellement insaturé ayant de 1 à 12 atomes de carbone,
R² représente un radical hydrocarboné aliphatique linéaire ou ramifié et éventuellement insaturé ayant de 1 à 30 atomes de carbone ou phényle,
m = 0 à 250,
n = 3 à 250 et
x = 1 à 12,
et les groupes oxyde d'éthylène ou oxyde d'alkylène supérieurs dans le composé polyoxyalkylène (D) peuvent être distribués de façon quelconque, et
b_{1γ}) en faisant réagir le produit de réaction provenant de l'étape b_{1α}) ou éventuellement b_{1β}) avec un composant (E) réactif vis-à-vis d'isocyanates, comportant au moins un groupe OH, NH₂, NH ou SH, ou
b₂) en faisant finalement réagir le produit de réaction provenant de l'étape a) avec le produit de réaction du composant (C) avec le composant (E) ainsi qu'éventuellement (D) et (C), ou
b₃) le produit de réaction provenant de l'étape a) avec le produit de réaction du composant (C) et (D) ainsi qu'éventuellement (C) et éventuellement avec le produit de réaction du composant (C) et (E) ainsi qu'éventuellement (C),
étant entendu que le composé polymère amphiphile n'est pas préparé par mise en réaction d'un produit de réaction d'éther diglycidylique de néopentylglycol et d'acide gras d'huile de tournesol avec un produit de réaction de 1-iso-cyanato-5-isocyanatométhyl-3,3,5-triméthylcyclohexane et méthoxypolyéthylèneglycol 1000.

2. Composé polymère selon la revendication 1, **caractérisé en ce qu'**on utilise en tant que composant (A) un composé glycidylique choisi dans le groupe constitué par l'éther diglycidylique de cyclohexane-diméthanol, l'éther triglycidylique de glycérol, l'éther diglycidylique de néopentylglycol, l'éther tétraglycidylique de pentaérythritol, l'éther diglycidylique de 1,6-hexanediol, l'éther diglycidylique de polypropylèneglycol, l'éther diglycidylique de polyéthylèneglycol, l'éther triglycidylique de triméthylolpropane, l'éther diglycidylique de bisphénol A, l'éther diglycidylique de bisphénol F, la 4,4"-méthylène-bis(N,N-diglycidylaniline), l'éther glycidylique de tétraphényloléthane, la N,N-diglycidylaniline, l'éther diglycidylique de diéthylèneglycol et l'éther diglycidylique de 1,4-butanediol ou un mélange de ceux-ci.

3. Composé polymère selon la revendication 1 ou 2, **caractérisé en ce qu'**on utilise en tant que composant réactif (B) des acides gras choisis dans le groupe constitué par l'acide gras de tallöl, l'acide stéarique, l'acide palmitique, l'acide gras d'huile de tournesol, l'acide gras d'huile de coprah (en C₈-C₁₈), l'acide gras d'huile de coprah (en C₁₂-C₁₈) , l'acide gras d'huile de soja, l'acide gras d'huile de lin, l'acide dodécanoïque, l'acide oléique, l'acide linoléique, l'acide gras d'huile de palmiste, l'acide gras d'huile de palme, l'acide linolénique et l'acide arachidonique.

4. Composé polymère selon l'une quelconque des revendications 1 à 3, **caractérisé en ce qu'**on utilise en tant que composant réactif (B) des alcanols choisis dans le groupe constitué par le 1-eicosanol, le 1-octadécanol, le 1-hexadécanol, le 1-tétradécanol, le 1-dodécanol, le 1-décanol et le 1-octanol.

5. Composé polymère selon l'une quelconque des revendications 1 à 4, **caractérisé en ce qu'**on utilise en tant que composant réactif (B) des dialkylamines choisies dans le groupe constitué par la 2-éthylhexylamine, la dipentylamine, la dihexylamine, la dioctylamine, la bis(2-éthylhexyl)amine, la N-méthyloctadécylamine et la didécylamine.

6. Composé polymère selon l'une quelconque des revendications 1 à 5, **caractérisé en ce qu'**on utilise de 0,9 à 1,1 mole du composant réactif (B) par mole des groupes glycidyle du composant (A).

7. Composé polymère selon l'une quelconque des revendications 1 à 6, **caractérisé en ce qu'**on utilise en tant que polyisocyanate aliphatique le 1-isocyanato-5-isocyanatométhyl-3,3,5-triméthylcyclohexane (IPDI), le bis-(4-isocyanato-cyclohexyl)-méthane (H12MDI), le 1,3-bis-(1-isocyanato-1-méthyl-éthyl)-benzène (m-TMXDI), le 1,6-diisocyanatohexane (HDI), éventuellement leurs homologues supérieurs ou un mélange industriel d'isomères des polyisocyanates aliphatiques individuels.

8. Composé polymère selon l'une quelconque des revendications 1 à 6, **caractérisé en ce qu'**on utilise en tant que polyisocyanate aromatique le 2,4-diisocyanatotoluène (TDI), le bis-(4-isocyanatophényl)-méthane (MDI) et éventuellement ses homologues supérieurs (MDI polymère) ou un mélange industriel d'isomères des polyisocyanates aromatiques individuels.

9. Composé polymère selon l'une quelconque des revendications 1 à 8, **caractérisé en ce qu'**on utilise le composé polyisocyanate en une quantité telle que le rapport d'équivalents de groupes NCO/OH ou du groupe OH libre dans le produit de réaction du composant glycidylique (A) et du composant réactif (B) provenant de l'étape a) vaut de 0,5 à 2,0.

10. Composé polymère selon l'une quelconque des revendications 1 à 9, **caractérisé en ce que** dans la formule (I) relative au composé polyoxyalkylène (D), R représente -CH₃, CH=CH₂- ou CH₂=CH-CH₂-.

11. Composé polymère selon l'une quelconque des revendications 1 à 10, **caractérisé en ce qu'**on utilise le composé polyoxyalkylène (D) en une quantité de 0,4 à 0,6 mole par mole de groupes isocyanate libres des produits de réaction dans l'étape b) ou, respectivement, du composé polyisocyanate (C).

12. Composé polymère selon l'une quelconque des revendications 1 à 11, **caractérisé en ce qu'**on utilise en tant que composant (E) des alcools, amines primaires ou secondaires ainsi que thiols aliphatiques ayant chacun de 1 à 12 atomes de carbone, ou des alcools, amines primaires ou secondaires ainsi que thiols aromatiques ayant de 6 à 10 atomes de carbone.

13. Composé polymère selon l'une quelconque des revendications 1 à 11, **caractérisé en ce qu'**on utilise en tant que composant (E) des amino- ou mercapto-silanes choisis dans le groupe constitué par le 3-aminopropyltriéthoxysilane, le 3-aminopropyltriméthoxysilane, le 2-aminoéthyl-3-aminopropyltriméthoxysilane, la bis-(3-triéthoxysilylpropyl)amine, la bis-(3-triméthoxysilylpropyl)-amine, le N-(n-butyl)-3-aminopropyl-triméthoxysilane, le N-(2-aminoéthyl)-3-aminopropyl-méthyldiméthoxysilane, le 3-aminopropylméthyldiéthoxysilane, le 3-mercaptopropyltriméthoxysilane et le 3-mercaptopropyltriéthoxysilane.

14. Composé polymère selon l'une quelconque des revendications 1 à 13, **caractérisé en ce qu'**on utilise le composant (E) en une quantité de 0,4 à 0,6 mole par mole de groupes isocyanate libres des produits de réaction dans l'étape b_{1α}) ou, respectivement, b_{1β}).

15. Procédé pour la préparation d'un composé polymère selon l'une quelconque des revendications 1 à 14, **caractérisé en ce que**
a) on fait réagir le composant glycidylique (A) avec le composant réactif (B) à des températures de 20 à 250 °C, éventuellement en présence d'un catalyseur acide ou basique, et
b₁) on fait ensuite réagir le produit de réaction provenant de l'étape a) avec
b_{1α}) d'abord le composant polyisocyanate (C) sans solvant, dans la plage de température de 20 à 120°C
b_{1β}) et éventuellement ensuite avec le composé polyoxyalkylène (D) à des températures de 20 à 150°C, et
b_{1γ}) on fait réagir le produit de réaction provenant de l'étape b_{1α}) ou éventuellement b_{1β}) avec le composant (E) à des températures de 20 à 150°C, ou
b₂) on fait enfin réagir le produit de réaction provenant de l'étape a) avec le produit de réaction du composant (C) avec le composant (E) ainsi qu'éventuellement (D) et (C), ou
b₃) le produit de réaction provenant de l'étape a) avec le produit de réaction du composant (C) et du composant (D) ainsi qu'éventuellement (C) et éventuellement avec le produit de réaction du composant (C) et du composant (E) ainsi qu'éventuellement (C),
étant entendu que le composé polymère amphiphile n'est pas préparé par mise en réaction d'un produit de réaction d'éther diglycidylique de néopentylglycol et d'acide gras d'huile de tournesol avec un produit de réaction de 1-isocyanato-5-isocyanatométhyl-3,3,5-triméthylcyclohexane et méthoxypolyéthylèneglycol 1000.

16. Procédé selon la revendication 15, **caractérisé en ce que**
a) on fait réagir le composant glycidylique (A) avec le composant réactif (B), puis
b_{1α}) on fait de nouveau réagir le produit de réaction provenant de l'étape a) avec le composant polyisocyanate (C), ensuite
b_{1β}) on fait réagir le produit de réaction provenant de l'étape b_{1α}) avec le composé polyoxyalkylène (D) sans solvant, à des températures de 20 à 150 °C, et enfin
b_{1γ}) on fait finalement réagir le produit de réaction provenant de l'étape b_{1β}) avec le composant (E) sans solvant, à des températures de 20 à 150 °C.

17. Procédé selon la revendication 15, **caractérisé en ce que**
a) on fait réagir le composant glycidylique (A) avec le composant réactif (B) et ensuite
b_{1α}) on fait de nouveau réagir le produit de réaction provenant de l'étape a) avec le composant polyisocyanate (C) et
b_{1β}) on fait enfin réagir le produit de réaction provenant de l'étape b_{1α}) soit successivement, soit simultanément, avec le composé polyoxyalkylène (D) et le composant (E) réactif vis-à-vis d'isocyanates.

18. Procédé selon la revendication 15, **caractérisé en ce que**
a) on fait réagir le composant glycidylique (A) avec le composant réactif (B) et ensuite
b₂) on fait enfin réagir le produit de réaction provenant de l'étape a) avec le produit de réaction du composant (C) avec le composant (E) ainsi qu'éventuellement le composant (D) et (C).

19. Procédé selon la revendication 15, **caractérisé en ce que**
a) on fait réagir le composant glycidylique (A) avec le composant réactif (B) et ensuite
b₃) on fait enfin réagir le produit de réaction provenant de l'étape a) avec le produit de réaction du composant (C) et du composant (D) ainsi qu'éventuellement (C) et éventuellement avec le produit de réaction du composant (C) et du composant (E) ainsi qu'éventuellement (C).

20. Utilisation d'un composé polymère selon l'une quelconque des revendications 1 à 14, pour l'imperméabilisation en masse de matériaux de construction à prise hydraulique.

21. Utilisation selon la revendication 20, **caractérisée en ce que** les composés polymères sont utilisés pour réprimer les efflorescences sur les surfaces de masses de matériaux de construction à prise hydraulique durcis.

22. Utilisation selon la revendication 20 ou 21, **caractérisée en ce que** les composés polymères sont ajoutés en une quantité de 0,001 à 5 % en poids, par rapport à la quantité de liant, à la masse de matériau de construction à prise hydraulique, non durcie.
